(19) **Europäisches Patentamt**
**European Patent Office**
**Office européen des brevets**

(11) **EP 3 327 411 B1**

(12) # EUROPEAN PATENT SPECIFICATION

(45) Date of publication and mention
of the grant of the patent:
**19.03.2025 Bulletin 2025/12**

(21) Application number: **16200940.1**

(22) Date of filing: **28.11.2016**

(51) International Patent Classification (IPC):
*G01J 3/06* (2006.01)    *G01J 3/10* (2006.01)
*G01J 3/26* (2006.01)    *G01J 3/28* (2006.01)
*G01J 3/02* (2006.01)

(52) Cooperative Patent Classification (CPC):
G01J 3/26; G01J 3/0218; G01J 3/06; G01J 3/10;
G01J 3/28; G01J 3/2803; G01J 3/2823;
G01J 2003/064

(54) **OPTICAL SYSTEM**

OPTISCHES SYSTEM

SYSTÈME OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.05.2018 Bulletin 2018/22**

(73) Proprietor: **Airbus Defence and Space GmbH
82024 Taufkirchen (DE)**

(72) Inventors:
• **GÜHNE, Tobias
81667 München (DE)**
• **KEIM, Corneli
88048 Friedrichshafen (DE)**
• **WEISE, Dennis
78467 Konstanz (DE)**
• **OTTER, Gerard Christiaan Jurjen
2641 JX Pijnacker (NL)**
• **KRAUSER, Jasper
80639 München (DE)**

(74) Representative: **Schornack, Oliver
Wuesthoff & Wuesthoff
Patentanwälte und Rechtsanwalt PartG mbB
Schweigerstraße 2
81541 München (DE)**

(56) References cited:
**US-B1- 7 554 667**

• SATOSHI OCHIAI ET AL: "Receiver Performance of the Superconducting Submillimeter-Wave Limb-Emission Sounder (SMILES) on the International Space Station", IEEE TRANSACTIONS ON GEOSCIENCE AND REMOTE SENSING, IEEE SERVICE CENTER, PISCATAWAY, NJ, US, vol. 51, no. 7, 1 July 2013 (2013-07-01), pages 3791 - 3802, XP011515817, ISSN: 0196-2892, DOI: 10.1109/ TGRS.2012.2227758
• SATOKO MIZOBUCHI ET AL: "In-Orbit Measurement of the AOS (Acousto-Optical Spectrometer) Response Using Frequency Comb Signals", IEEE JOURNAL OF SELECTED TOPICS IN APPLIED EARTH OBSERVATIONS AND REMOTE SENSING, IEEE, USA, vol. 5, no. 3, 1 June 2012 (2012-06-01), pages 977 - 983, XP011449272, ISSN: 1939-1404, DOI: 10.1109/ JSTARS.2012.2196413
• STEVE OSTERMAN ET AL: "<title>A proposed laser frequency comb-based wavelength reference for high-resolution spectroscopy</ title>", BIOMEDICAL PHOTONICS AND OPTOELECTRONIC IMAGING : 8 - 10 NOVEMBER 2000, BEIJING, CHINA, vol. 6693, 12 September 2007 (2007-09-12), Bellingham, Wash., US, pages 66931G - 66931G-9, XP055255574, ISBN: 978-1-62841-832-3, DOI: 10.1117/12.734193

## Description

FIELD OF THE INVENTION

This invention generally relates to an optical system and method for performing in-orbit instrument spectral response function measurements, as well as methods for calibrating a spectrometer and use of the optical system for relative radiometric calibration.

BACKGROUND TO THE INVENTION

When an optical system is used in space, there are only a limited amount of time and a limited number of calibration sources available such that calibration of the optical system is currently not possible with the required precision while a measurement is being performed using the optical system in-orbit. Therefore, a lengthy and extensive characterization and calibration of the optical instrument is performed in the laboratory on-ground before using the optical instrument in the orbit.

The current state of the art for instrument spectral response function measurements is the use of a monochromator with an echelle grating or a tunable laser source where the laser line is scanned over the spectral range of the instrument under investigation. An echelle grating is a type of diffraction grating with a relatively low groove density in which the shape of the groove is optimized such that the echelle grating may be used at high incidence angles and hence in high diffraction orders. This has been used for the first time in the OMI (Ozone Monitoring instrument) calibration (Kees Smorenburg; Marcel R. Dobber; Erik Schenkeveld; Ramon Vink; Huib Visser; Proc. SPIE 4881, Sensors, Systems, and Next-Generation Satellites VI, 511 (April 8, 2003); doi:10.1117/12.462482) and later added to the GOME-2 (Global Ozone Monitoring Experiment-2) calibration. In OMI and GOME-2, the instrument spectral response function is referred to as a slit-function. Ever since, detailed knowledge of the instrument spectral response function is used in the retrieval algorithms of spectrometers.

Further prior art can be found, for example, in US 7,554,667 B1, which generally relates to a method and an apparatus for characterizing hyperspectral instruments. The monochromator with the echelle grating was configured such that multiple grating orders were exiting the exit slit. Therefore, multiple lines could be scanned in parallel. However, a strong disadvantage of this configuration is the low output power, leading to long measurement times. Furthermore, the linewidth cannot be made narrow enough for longer wavelengths.

Measuring the instrument spectral response function of a spectrometer in-orbit is currently an unsolved problem. The data product of a spectrometer is fundamentally determined by the shape and width of the instrument spectral response function. So far, these parameters have been determined once during a calibration on-ground and are afterwards presumed to be constant and as such given during the entire exploitation of the optical system in the orbit. However, it has been shown that in particular effects which might occur during the start of an in-orbit mission using the optical system, or potential ageing effects due to hard radiation while the system is used in the orbit may change the instrument spectral response function which might lead to significant errors in data produced using the spectrometer. Further effects which may deteriorate the knowledge of the instrument spectral response function are additional ground-to-orbit effects such as, for example, gravity release or temperature change.

There is therefore a need for further improvements of optical systems which are used in-orbit.

The document " A proposed laser frequency comb based wavelength reference for high resolution spectroscopy", Osterman et al. Proc. of SPIE Vol. 6693, 66931 (XP055255574) discloses prior art wavelength calibration for high-resolution spectroscopy.

SUMMARY OF THE INVENTION

The invention is set out in the independent claims. Preferred embodiments of the invention are outlined in the dependent claims.

We describe an optical system for performing in-orbit instrument spectral response function measurements according to claim 1.

We note that the discrete elements are equally spaced in the frequency range (i.e. frequency space), and are projected onto the optical detection unit in the spectral range.

The inventors have realized that optical detection units, such as spectrometers, used for observing the earth have a significantly lower resolution compared to devices, for example astronomical telescopes, which are used on-ground, such that using optical frequency combs requires a particularly large distance between the modes and an effective suppression of modes in the free spectral range for spectral calibration if used in-space. However, it is noted that embodiments of the present invention may also be applied to astronomical telescopes (for example NIRSpec - James Webb telescope) which may be deployed in space. Hence an in-orbit comb calibration may be of interest to such instruments as well. It is noted that in this case the spectral resolution is finer (see astro-comb) and appropriate engineering may need to be performed for enabling embodiments of the present invention to be applied to these instruments as well. Embodiments of the present invention may provide a source with a very specific spectrum which can then be applied to various instruments which may profit from the advantages provided by embodiments of the present invention. A calibration signal may be obtained via the optical frequency comb whereby side-modes in the free spectral range are suppressed.

Using an optical frequency comb may therefore allow measuring the characteristics of the instrument spectral response function of one or more components of an optical system which may change over time due to the conditions in the orbit.

It is noted that any references to the elements being equally spaced relate to the spacing of the elements in the frequency space.

According to embodiments of the optical system, the frequency comb is imaged onto the optical detection unit such that the instrument spectral response function measurement may advantageously be performed faster compared to a system in which merely a single laser light-source is used. The optical frequency comb therefore advantageously extends the concept of a laser line being scanned over the spectral range of the instrument under investigation to multiple comb-lines which may be scanned over the spectral range of the instrument under investigation.

Furthermore, using an optical frequency comb generator allows for absolute knowledge of the wavelengths used, thereby resulting in accurate measurements.

By providing the optical system comprising an optical frequency comb generator, the measurement of the instrument spectral response function may be performed on-ground and repeated in-orbit. As the calibration expenditure on-ground may thereby be reduced using embodiments of the optical system, costs spend to, for example, calibrate the optical system on-ground may be significantly lowered before the start of the mission during which the optical system is used in-orbit.

Embodiments of the optical system comprising an optical frequency comb generator allow for absolute knowledge of important parameters in the orbit which can currently not be measured, but which are essential for instrument performance. The calibration signal generated using the optical frequency comb may allow determining parameters which may be relevant during the flight of the system in the orbit (and/or at the ground prior to the flight mission).

Embodiments of the optical system may further advantageously allow for reducing the effect of ageing of the optical instrument in the orbit on data obtained via the optical system. This allows for optimizing the performance of the optical system when used in-orbit.

The optical frequency comb may in some embodiments be coupled in at the telescope via, for example, mirrors or via a mechanical method.

According to the invention, the optical system further comprises a tuning unit configured to vary a frequency spectrum of the frequency comb. This may be particularly advantageous as a plurality of frequencies of each of the discrete, equally spaced elements may be used in order to assess the centroid and shape of the instrument spectral response function. The frequency ranges in which side modes may be suppressed may thereby be successively changed.

According to the invention, , the tuning unit is configured to vary a frequency of a said element continuously over at least a free spectral range.

The free spectral range is hereby the spacing in optical frequency between two successive discrete elements. This may be particularly advantageous as a single scan may allow for assessing the centroid and shape of the instrument spectral response function over a continuous frequency spectrum.

In a further preferred embodiment of the optical system, the optical detection unit comprises a plurality of detector pixels, and wherein the optical system is configured to project each one of the elements having a different, respective frequency onto a corresponding, respective one of the detector pixels. This may be particularly advantageous as the time during which an entire continuous frequency spectrum may be projected onto the optical detection unit may be significantly decreased. Embodiments of the present invention may therefore be used to test the instrument including, inter alia, the instrument detection unit (optical detection unit).

In a further preferred embodiment, the optical detection unit comprises a spectrometer having a spectral resolution of about 0.01 nm to several nm (e.g. up to about 10 nm). This may be advantageous as, for example, a spectrometer typically used for earth observation may be exploited, whereby the optical frequency comb generator allows resolving the lines of a spectrum so that data obtained via the optical system does not need to rely on sub-resolution knowledge of the instrument spectral response function, as may be the case with spectrometers of the state of the art.

In a related aspect of the present invention, there is provided a method for performing in-orbit or on-ground instrument spectral response function measurements according to claim 4.

According to the invention, the method further comprises varying frequencies of each of the plurality of discrete, equally spaced elements over a free spectral range to project a continuous frequency spectrum onto the optical detection unit. As outlined above, this may be particularly advantageous as the measurement of the instrument spectral response function may be performed faster, as a single scan may allow for assessing the instrument spectral response function centroid and shape.

In a further related aspect of the present invention, the optical system as described in embodiments herein is used for an in-orbit or on-ground instrument spectral response function measurement.

We further describe a method for calibrating a spectrometer, the method comprising: providing a spectrometer and an optical frequency comb generator for generating a frequency comb comprising a plurality of discrete, equally spaced elements, wherein the optical frequency comb generator is coupled into an optical path of the spectrometer at a plurality of positions along the optical path via one or more optical fibers; and moving a fiber output across an opening of the spectrometer to image the frequency comb onto a detector of the spectrometer for each position of the fiber output with respect to the opening to calibrate the spectrometer.

We further describe a method for calibrating a spectrometer for use in-orbit or on-ground, the method comprising: providing (i) a spectrometer comprising a detector comprising a plurality of pixels and (ii) an optical frequency comb generator for generating a frequency comb comprising a plurality of discrete, equally spaced elements; assigning a position on the detector to a wavelength by inputting the frequency comb into the spectrometer to obtain a pixel-dependent output, wherein the output is a function of the wavelength of a said element and a coordinate of a said pixel, wherein a centroid of the output calculated over a plurality of said pixels corresponds to the wavelength, and wherein each of the elements is used as a wavelength reference; and wherein the method further comprises scanning the elements over a plurality of said pixels to calibrate the spectrometer.

Examples of the method for calibrating a spectrometer may be used for co-registration of, for example, a plurality of spectrometers. The optical frequency comb may thereby be coupled in at the spectrometer field plane.

Coupling the optical frequency comb into the optical path of the spectrometer allows for characterizing co-registration between all spectral chains of the same telescope using the resulting set of point sources in the same field plane of the telescope.

In a further aspect of the present invention, the optical system as described in embodiments herein is used for relative radiometric calibration.

BRIEF DESCRIPTION OF THE DRAWINGS

These and other aspects of the invention will now be further described, by way of example only, with reference to the accompanying figures, wherein like reference numerals refer to like parts, and in which:

Figure 1 shows a schematic illustration of an optical system according to embodiments of the present invention;

Figure 2 shows a schematic illustration of an optical system for performing in-orbit instrument spectral response function measurements according to embodiments of the present invention;

Figure 3 shows an instrument spectral response function measurement principle according to embodiments of the present invention;

Figure 4 shows a schematic illustration of an optical system for performing co-registration according to embodiments of the present invention; and

Figure 5 shows a schematic illustration of an optical system used for relative radiometric calibration according to embodiments of the present invention.

DETAILED DESCRIPTION OF PREFERRED EMBODIMENTS

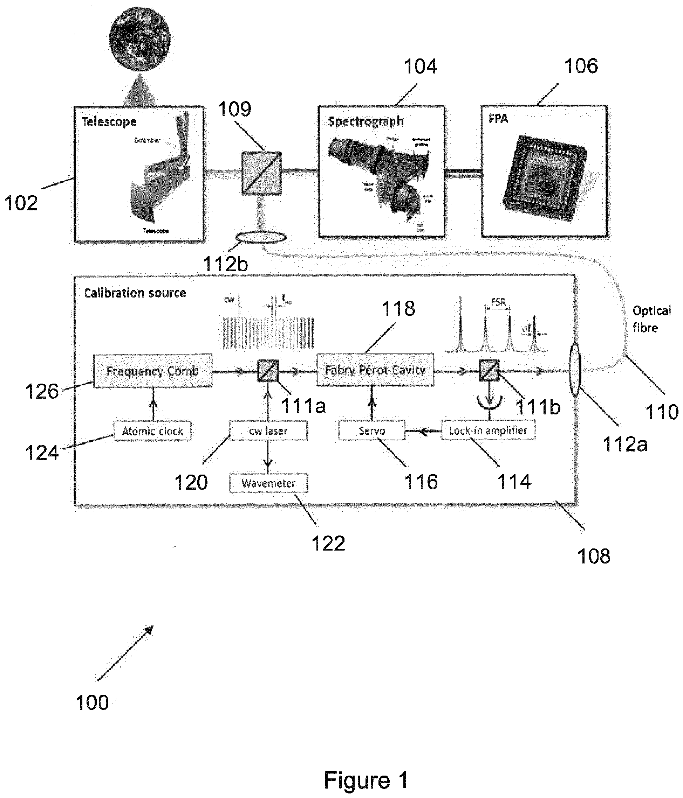

Figure 1 shows a schematic illustration of an optical system 100 according to embodiments as described herein.

In this example, the optical system 100 comprises a telescope 102 which is coupled to a spectrograph 104 and a focal plane array 106.

A multi-spectral calibration signal is coupled via an optical fiber 110 into the optical path between the telescope 102 and the spectrograph 104 at various positions according to the calibration task. In this example, the calibration signal is coupled into the optical path between the telescope 102 and the spectrograph 104 via lenses 112a and 112b which are connected to each other via the optical fiber 110. In this example, a beam splitter 109 is provided in the optical path between the telescope 102 and the spectrograph 104 at which the multi-spectral calibration signal is coupled into the optical path between the telescope 102 and the spectrograph 104.

In this example, the calibration source 108 contains an optical frequency comb 126 which provides for an absolute, repeatable frequency scale defined by a series of laser modes which are equally spaced across the frequency spectrum. Furthermore, in this example, an atomic clock 124 is coupled to the optical frequency comb 126 in order to stabilize the optical frequency comb 126.

A beam splitter 111a allows coupling of the optical signal from the optical frequency comb 126 with that of a continuous-wave laser 120 which is locked to one comb line and simultaneously fed to a wavemeter 122.

In this example, a Fabry-Perot cavity 118 is provided in the calibration source 108 in order to filter out unwanted modes from the optical frequency comb spectrum. An electronic servo system 116 is coupled in this example to the Fabry-Perot cavity 118 in order to generate effective mode spacings.

The output signal of the Fabry-Perot cavity 118 is, in this example, fed back to the electronic servo system 116 via a beam splitter 111b and a lock-in amplifier 114.

The multi-spectral calibration signal is then output from the calibration source 108 via the optical lens 112a.

The optical frequency comb 126 which is locked to the atomic clock 124 and the continuous-wave laser 120 allows for providing an absolute frequency. Unwanted modes are suppressed when passing through the Fabry-Perot cavity 118. The modes within the free spectral range and thereby suppressed, whereas only resonant frequencies are transmitted.

It is noted that a Fabry-Perot cavity is one possibility to achieve the desired mode separation. Alternative approaches may be used to achieve mode separation and tuning to the modes.

It will be appreciated that a plurality of optical fibers may be used in order to couple the multi-spectral calibration signal into the optical path between the telescope 102 and the spectrograph 104.

A spectral calibration of the optical system may thereby be performed using the calibration source 108 comprising the optical frequency comb 126.

The optical frequency comb 126 provides a dense and discrete spectrum of absolutely known lines used to maintain the spectral axis. As outlined above, using an optical frequency comb may be particularly advantageous as the spectral calibration may be performed extensively in-orbit.

In some examples, the signal may be superimposed with the earth observation signal (for example 1/100 images, scenes with low spectral content).

Using an optical frequency comb provides for significantly faster spectral calibration compared to a system in which only a single laser source is used as one shot allows for absolute calibration of the optical system. Furthermore, using an optical frequency comb allows for absolute knowledge of the wavelength.

Examples of the optical system as described herein may be used for measurements which are performed on-ground and which may then be repeated in the orbit. Furthermore, comb lines contained in the earth spectrum may be used as a reference in real-time.

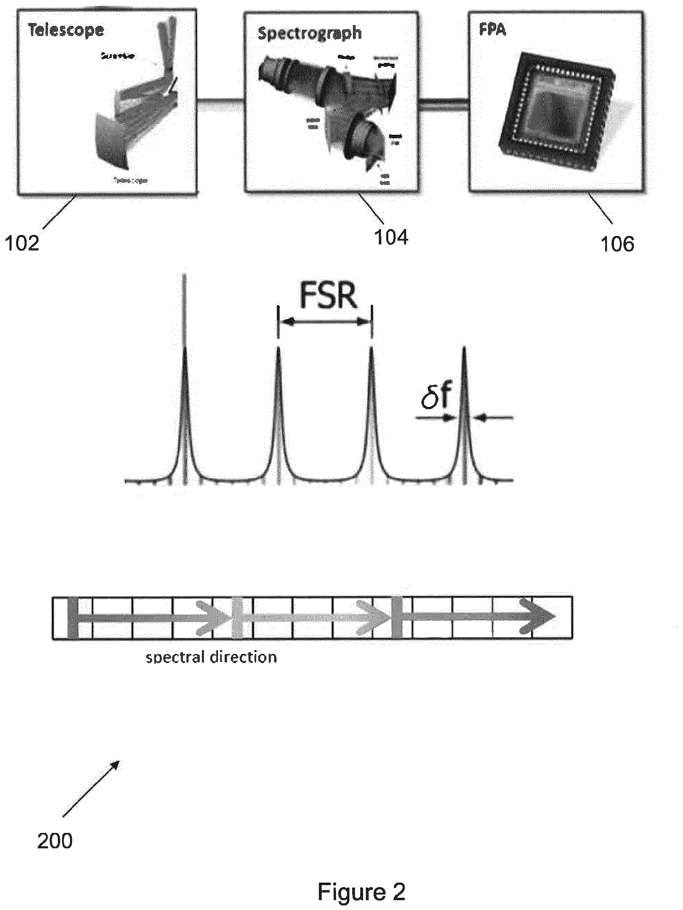

Figure 2 shows a schematic illustration of an optical system 200 used for instrument spectral response function measurements.

In this example, the optical frequency comb is coupled in at the optical path between the telescope 102 and the spectrograph 104. As shown in the central part of Figure 2, modes lying within the free spectral range are suppressed. This allows for accurate measurements as the wavelengths of the non-suppressed modes are precisely known.

By tuning the frequencies of the modes with maximum intensity through the free spectral range, a continuous spectrum of frequencies may be imaged onto the focal plane array 106. As outlined above, this may be particularly advantageous as one single scan allows for assessing the instrument spectral response function centroid and shape. This is particularly important as the instrument spectral response function may change over time in the orbit, which may be accounted for in the instrument spectral response function measurements in which an optical frequency comb is used.

Similar to the example shown in Figure 1, the optical system of Figure 2 can be used for performing measurements on-ground which can then be repeated in-orbit.

In the following the definition of the instrument spectral response function is provided and a detailed measurement principle of this parameter is presented.

The instrument spectral response function (ISRF) is defined as the impulse answer of, for example, a spectrometer to a Dirac stimulus. A mathematical definition reads as:

$$L'(\lambda_0) = \int_0^\infty ISRF\,(\lambda, \lambda_0)\,L\,(\lambda)\,d\lambda$$

with L being the radiance of the input spectrum, **L'** denoting the instrument measured spectrum, $\lambda$ the wavelength, and ISRF the instrument spectral response function.

As outlined above, earth observation spectrometers which are used to record earth reflectance spectra in various wavelengths typically possess a relatively coarse spectral resolution in the order of 0.5 to 1 nm. Hence they do not resolve the lines of a spectrum so the data products of these instruments are relying on sub resolution knowledge of the instrument spectral response function.

In order to measure the instrument spectral response function, a two-step approach is followed in this example: 1) Spectral assignment of the wavelength axis; and 2) instrument spectral response function determination.

Imaging spectrographs make use of array charge-coupled devices (CCDs) or complementary metal-oxide-semiconductors (CMOS) to simultaneously measure the entire spectrum. Therefore an assignment of a position on the detector (i.e. pixel center) to a wavelength may be the first important step of a spectral calibration. Therefore, a monochromatic and uniform input (e.g. laser lines of frequency combs) results in a pixel dependent output. The output is a function of the wavelength of the stimulus (i.e. n-th line of an optical frequency comb) and the pixel coordinate. The centroid of the output signal calculated over several pixels relates to the wavelength. Hence a unique assignment of a wavelength to a pixel coordinate is achieved. Using an optical frequency comb, each comb line can be used as a wavelength reference. The parameter which may then be adjusted is the comb spacing which may be in line with the (pixel-) sampling of the spectrograph, with isolated lines, i.e. no other line in a $\pm 2*3$ spectral resolution vicinity with an intensity > 0.1%.

By locking the optical frequency comb to an absolute frequency standard, the exact wavelengths of each comb line is known and can be transferred to pixels by the above described process.

The goal of an instrument spectral response function characterization is to assign an instrument response to each pixel and the respective wavelength (step 1). The instrument spectral response function is measured by a tunable laser line (or, in this example, n-comb lines of an optical frequency comb). The stimulus is scanned over several pixels covering, in this example, at least 20 points and thus achieving an oversampling of a pixel.

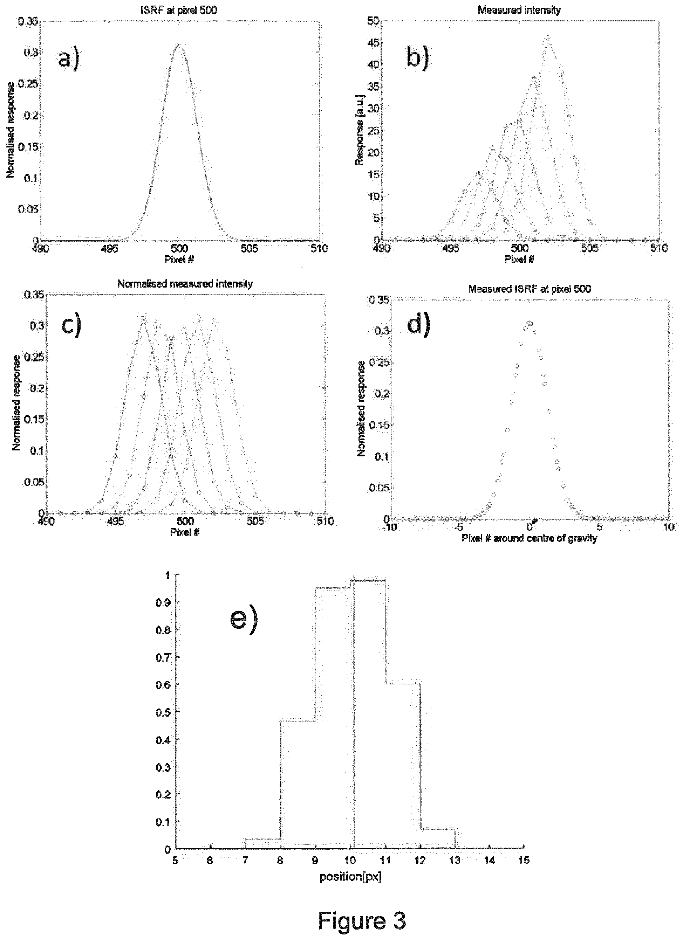

Figure 3 shows schematically the measurement principle. In Figure 3a, the ideal instrument spectral response function centered at, in this example, pixel number 500 is shown that shall be derived by the measurement. In Figure 3b, some results of a laser line scanned across the pixels around pixel number 500 are shown. Note that the circles indicate measured points derived from the pixel response (see blue plot in Figure 3e, which shows a sketch of pixel response [blue] to a stimulus [red: laser line of narrow stimulus]: center of pixel, e.g. 7.5). In Figure 3c, the normalized responses are shown, and in Figure 3d the measured points are shifted and centered around pixel number 500 and thus reveal the instrument spectral response function of the pixel under investigation with subpixel resolution.

Finally using the results of step 1) above allows linking the instrument spectral response function to a wavelength.

We note again that a scan using n-laser lines of an optical frequency comb will reduce the measurement duration of the whole spectral range of the instruments by a factor n compared to a single laser light-source.

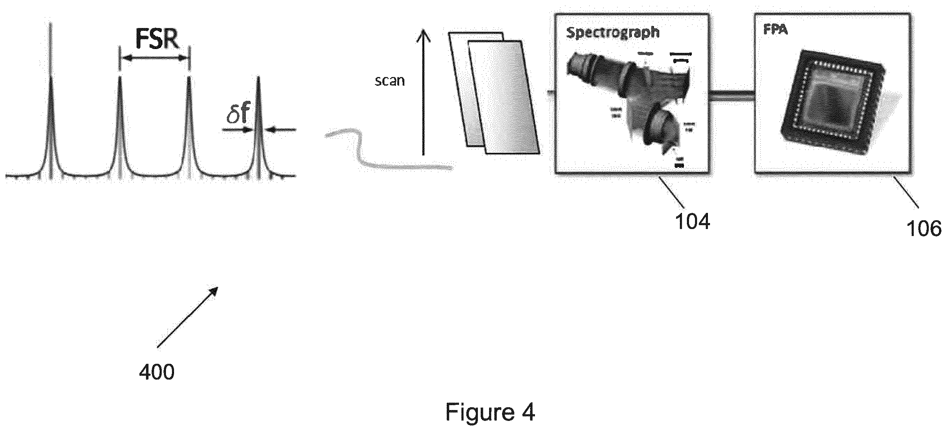

Figure 4 shows a schematic illustration of an optical system 400 used for a co-registration.

In this example the optical frequency comb is coupled in at the spectrometer field plane, for example at the opening of the spectrometer which may be a slit.

In this example, the optical fiber output originating from the optical frequency comb is moved within the slit of the spectrometer such that the optical frequency comb spectrum is imaged onto the detector for each slit position.

The resulting set of point sources in the same field plane of the telescope is an ideal measure to characterize co-registration between all spectral chains of the same telescope. A broadband signal may thereby be coupled into the spectrograph 104.

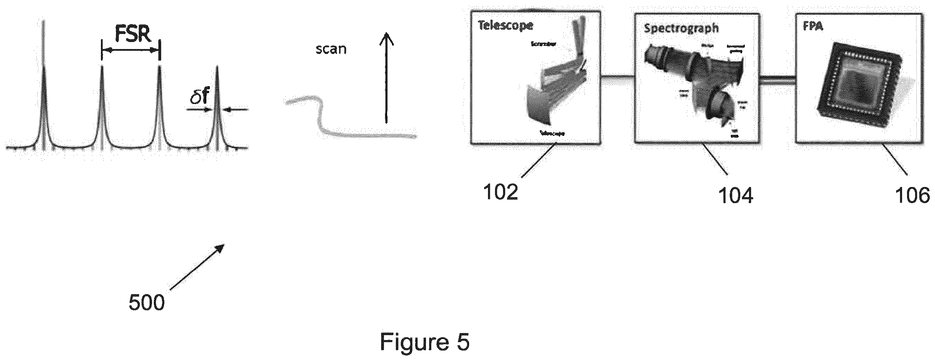

Figure 5 shows a schematic illustration of an optical system 500 used for radiometric calibration.

In this example, the optical frequency comb signal is coupled in at the telescope 102.

Absolute radiometric accuracy is needed only for the ratio $E_{sun}/L_{earth}$, whereby $E_{sun}$ denotes the irradiance emission of the sun as a point-like light-source and $L_{earth}$ denotes the radiance of the earth's emission per radian.

It is noted that this is an example of how absolute calibration is performed in-orbit using the sun as a reference. The comb may be used to provide a second signal for relative spectral calibration via two different ports allowing characterizing the calibration units transmission which may suffer from ageing. The measurement may be used to support absolute calibration. Other instruments may rely on other calibration sources than the sun, for example stars. The sun may be regarded as an example but embodiments described herein are not limited thereto.

Generally, a comparison of the detector signals $S_{sun}$ and $S_{earth}$ is not possible. This is, the ratio of the detector signals $S_{sun}$ and $S_{earth}$ is not the wanted ratio $E_{sun}/L_{earth}$. The factor which is missing is the calibration units transmission. Due to the Doppler shift, $\Delta\lambda/\lambda = 25$ ppm, wherein $\Delta\lambda=0.06$ nm in the short-wavelength IR.

A stable source which can be used as E (point-like light-source; irradiance) for the sun port and as L (radiance) for the earth port provides for current calibration units transmission including degradation without a Doppler shift.

The radiometric calibration is therefore particularly accurate as the frequencies of the optical frequency comb are known precisely.

Similar to the optical systems as shown in Figures 1, 2 and 4, the optical system shown in Figure 5 can be used to perform the measurement on-ground and may then be repeated in-orbit.

No doubt many other effective alternatives will occur to the skilled person. It will be understood that the invention is not limited to the described embodiments and encompasses modifications apparent to those skilled in the art and lying within the scope of the claims appended hereto.

## Claims

1. An optical system (100, 200, 400, 500) for performing in-orbit instrument spectral response function measurements, the optical system comprising:

    an optical detection unit; and
    an optical frequency comb generator for projecting a frequency comb comprising a plurality of discrete, equally spaced elements onto said optical detection unit, wherein the discrete, equally spaced elements are spaced equally in frequency space,
    **characterized in that** the optical system further comprises
    a tuning unit configured to vary a frequency spectrum of said frequency comb,
    said tuning unit is configured to vary a frequency of a said element continuously over at least a free spectral range.

2. An optical system (100, 200, 400, 500) as claimed in claim 1, wherein said optical detection unit comprises a plurality of detector pixels, and wherein said optical system is configured to project each one of said elements having a different, respective frequency onto a corresponding, respective one of said detector pixels.

**3.** An optical system (100, 200, 400, 500) as claimed in any preceding claim, wherein said optical detection unit comprises a spectrometer having a spectral resolution of about 0.01 nm to several nm.

**4.** A method for performing in-orbit or on-ground instrument spectral response function measurements, the method comprising:

> providing an optical detection unit and an optical frequency comb generator; and
> projecting a frequency comb comprising a plurality of discrete, equally spaced elements onto said optical detection unit, wherein the discrete, equally spaced elements are spaced equally in frequency space,
> **characterized in that** the method further comprises:
>
>> varying a frequency spectrum of said frequency comb,
>> varying continuously a frequency of a said element over at least a free spectral range.

**5.** A method as claimed in claim 4, further comprising varying frequencies of each of said plurality of discrete, equally spaced elements over a free spectral range to project a continuous frequency spectrum onto said optical detection unit.

**6.** Use of the optical system as claimed in any one of claims 1 to 3 for an in-orbit or on-ground instrument spectral response function measurement.

**7.** Use of the optical system as claimed in any one of claims 1 to 3 for relative radiometric calibration.

**Patentansprüche**

**1.** Optisches System (100, 200, 400, 500) zur Durchführung von Messungen der spektralen Ansprechfunktion von Instrumenten im Orbit, wobei das optische System umfasst:

> eine optische Detektionseinheit; und
> einen optischen Frequenzkammgenerator zum Projizieren eines Frequenzkamms, der eine Vielzahl diskreter, gleichmäßig beabstandeter Elemente umfasst, auf die optische Detektionseinheit, wobei die diskreten, gleichmäßig beabstandeten Elemente im Frequenzraum gleichmäßig beabstandet sind,
> **dadurch gekennzeichnet, dass** das optische System ferner umfasst:
>
>> eine Abstimmeinheit, die dazu eingerichtet ist, ein Frequenzspektrum des Frequenzkamms zu variieren,
wobei die Abstimmeinheit dazu eingerichtet ist, eine Frequenz eines Elements kontinuierlich über mindestens einen freien Spektralbereich zu variieren.

**2.** Optisches System (100, 200, 400, 500) nach Anspruch 1, wobei die optische Detektionseinheit eine Mehrzahl von Detektorpixeln umfasst und wobei das optische System dazu eingerichtet ist, jedes der Elemente mit einer jeweils unterschiedlichen Frequenz auf ein entsprechendes jeweiliges der Detektorpixel zu projizieren.

**3.** Optisches System (100, 200, 400, 500) gemäß einem der vorstehenden Ansprüche, wobei die optische Detektionseinheit ein Spektrometer mit einer spektralen Auflösung von etwa 0,01 nm bis zu mehreren nm umfasst.

**4.** Verfahren zur Durchführung von Messungen der spektralen Ansprechfunktion von Instrumenten im Orbit oder am Boden, wobei das Verfahren umfasst:

> Bereitstellen einer optischen Detektionseinheit und eines optischen Frequenzkammgenerators; und
> Projizieren eines Frequenzkamms, der eine Mehrzahl diskreter, gleichmäßig beabstandeter Elemente umfasst, auf die optische Detektionseinheit, wobei die diskreten, gleichmäßig beabstandeten Elemente gleichmäßig im Frequenzraum beabstandet sind,
> **dadurch gekennzeichnet, dass** das Verfahren ferner umfasst:
>
>> Variieren eines Frequenzspektrums des Frequenzkamms,
>> kontinuierliches Variieren einer Frequenz eines Elements über mindestens einen freien Spektralbereich.

**5.** Verfahren nach Anspruch 4, das ferner ein Variieren von Frequenzen jedes der Mehrzahl von diskreten, gleichmäßig beabstandeten Elementen über einen freien Spektralbereich umfasst, um ein kontinuierliches Frequenzspektrum auf die optische Detektionseinheit zu projizieren.

**6.** Verwendung des optischen Systems gemäß einem der Ansprüche 1 bis 3 für eine Messung der spektralen Ansprechfunktion eines Instruments im Orbit oder am Boden.

**7.** Verwendung des optischen Systems gemäß einem der Ansprüche 1 bis 3 für eine relative radiometrische Kalibrierung.

**Revendications**

1. Système optique (100, 200, 400, 500) permettant d'effectuer des mesures de la fonction de réponse spectrale d'instrument en orbite, le système optique comprenant:

   une unité de détection optique; et
   un générateur de peigne de fréquences optiques pour projeter un peigne de fréquences comprenant une pluralité d'éléments séparés, espacés régulièrement sur ladite unité de détection optique, dans lequel les éléments séparés, espacés régulièrement sont espacés de manière régulière dans l'espace des fréquences, **caractérisé en ce que** le système optique comprend en outre
   une unité d'accord conçue pour modifier un spectre de fréquences dudit peigne de fréquences,
   ladite unité d'accord est conçue pour modifier une fréquence dudit élément de manière continue sur au moins une gamme spectrale libre.

2. Système optique (100, 200, 400, 500) selon la revendication 1, dans lequel ladite unité de détection optique comprend une pluralité de pixels de détection, et ledit système optique est conçu pour projeter chacun desdits éléments ayant une fréquence respective différente sur l'un desdits pixels de détection correspondant.

3. Système optique (100, 200, 400, 500) selon l'une quelconque revendication précédente, dans lequel ladite unité de détection optique comprend un spectromètre ayant une résolution spectrale d'environ 0,01 nm à plusieurs nm.

4. Procédé pour effectuer des mesures de la fonction de réponse spectrale d'instrument en orbite ou au sol, le procédé comprenant:

   la fourniture d'une unité de détection optique et un générateur de peigne de fréquences optiques; et
   la projection d'un peigne de fréquences comprenant une pluralité d'éléments séparés espacés régulièrement sur ladite unité de détection optique, les éléments séparés, espacés régulièrement étant espacés régulièrement dans l'espace des fréquences, **caractérisé en ce que** le procédé comprend en outre:

   la modification d'un spectre de fréquences dudit peigne de fréquences,
   la modification en continu d'une fréquence dudit élément sur au moins une gamme spectrale libre.

5. Procédé selon la revendication 4, comprenant en outre la modification des fréquences de chacun de ladite pluralité d'éléments séparés, espacés régulièrement, sur une gamme spectrale libre afin de projeter un spectre de fréquences continu sur l'unité de détection optique.

6. Utilisation du système optique selon l'une quelconque des revendications 1 à 3 pour une mesure de la fonction de réponse spectrale d'instrument en orbite ou au sol.

7. Utilisation du système optique selon l'une quelconque des revendications 1 à 3 pour l'étalonnage radiométrique relatif.

Figure 1

Figure 2

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7554667 B1

**Non-patent literature cited in the description**

- **KEES SMORENBURG** ; **MARCEL R. DOBBER** ; **ERIK SCHENKEVELD** ; **RAMON VINK** ; **HUIB VISSER**. *Proc. SPIE 4881, Sensors, Systems, and Next-Generation Satellites VI*, 08 April 2003, vol. 511

- **OSTERMAN et al.** A proposed laser frequency comb based wavelength reference for high resolution spectroscopy. *Proc. of SPIE*, vol. 6693, 66931